# EUROPEAN PATENT SPECIFICATION

(11) **EP 0 659 048 B1**
(45) Date of publication and mention of the grant of the patent: **18.11.1998**
(21) Application number: 94922486.9
(22) Date of filing: 05.07.1994
(51) Int. Cl.: A01N 43/40

(54) **METHOD FOR PLANT GROWTH REGULATION**
VERFAHREN ZUR REGULIERUNG DES PFLANZENWACHSTUMS
PROCEDE DE REGULATION DE LA CROISSANCE DES PLANTES

(30) Priority: 05.07.1993 GB 9313838
(43) Date of publication of application: 28.06.1995
(73) Proprietor: Dow AgroSciences LLC, Indianapolis, Indiana 46268 (US)
(72) Inventor: BUENDIA, Jose, E-28033 Madrid (ES); PEREZ GIL, Jose, Luis, E-46022 Valencia (ES); MOLINA, Rafael Avenida Infante Juan Manuel, E-30011 Murcia (ES)
(74) Representative: Raynor, John
(86) International application number: US9407526
(87) International publication number: WO9501725

(56) References cited:
- CHEMICAL ABSTRACTS, vol. 93, no. 21, 1980, Columbus, Ohio, US; abstract no. 199243e,

## Description

This invention relates to methods for regulating plant growth and enhancing fruit production by application of 3,5,6-trichloro-2-pyridyloxyacetic acid or an ester or a salt thereof to a fruit bearing plant.

3,5,6-trichloro-2-pyridyloxyacetic acid, also known as triclopyr, is a well known herbicide for woody plants. Methods of preparing triclopyr and lower alkyl esters thereof are disclosed in, for example, U.S. Patent Nos. 3,862,952, 4,127,582, and 4,701,531.

Use of triclopyr as a thinning agent for mandarin orange is disclosed in Japanese patent application Kokai No. 80/100307.

The invention provides a method for regulating plant growth which comprises applying to a fruit bearing plant an amount of 3,5,6-trichloro-dyloxyacetic acid or a lower (C₁₋₁₀) alkyl ester or salt thereof that is nonphytotoxic and effective to provide increased fruit size or quality or faster maturation without causing significant thinning.

A preferred embodiment of the invention is application of triclopyr to citrus, pome, or stone fruit trees in an amount that is both nonphytotoxic and effective to enhance fruit size.

A particularly preferred embodiment of the invention is use of triclopyr in controlling development of citrus fruit.

As used herein, the term "nonphytotoxic" means not significantly toxic to the plant.

The preferred method of application is as a medium to high volume overall spray to the fruit bearing plant. The application rate is in the range from about 10g/ha to about 50 g/ha. In a preferred embodiment, a solution containing 5-15 ppm of triclopyr in water is applied to fruit trees at a rate of about 1000 to about 2500 L/ha.

The preferred active ingredient is triclopyr acid, however lower alkyl esters (for example C₁₋₁₀, generally C₁₋₄ esters) and salts of triclopyr may also be used.

The preferred formulation is a water dispersible tablet formed by compressing a mixture comprising 10 percent by weight of triclopyr acid and 90 percent by weight of tablet binder.

Timing of application is critical to avoiding thinning. As used herein, the term "significant thinning" means thinning that results in a yield loss greater than 25 percent (where yield refers to the number of fruit). Significant thinning can result if an application is made before the fruit has reached an appropriate growth stage. In general, the higher the rate and the sooner the application, the greater the danger of experiencing significant thinning. In citrus, the appropriate time for application is at the early stage of fruit growth (20-30 mm fruit diameter). The ideal application rate and timing varies somewhat by species, but can be determined by routine experimentation.

For lemons, applying triclopyr at a rate of about 37.5 g/ha when the lemons have an average diameter of about 22-28 mm gives maximum increase in fruit size and advances harvest by approximately one month. The size range 22-28 mm is important. If the lemons are smaller than 22 mm they are likely to drop, and if larger than 28 mm they will receive less than optimum stimulation. When flowering is homogeneous, one application at the 37.5 g/ha is sufficient. When the flowering period is long, two applications at half that rate about 10 to 15 days apart may be used.

Spanish lemons are harvested when the fruit has a diameter of about 56 mm. There are typically three harvests per season. In plots treated with 37.5 g/ha of triclopyr there are typically twice as many lemons harvested at the first collection than in similar control plots. Lemons can be harvested two to three weeks earlier. Yield increases of about 10 percent have been observed. The quality of treated lemons including colour, pulp, and rate of decomposition after storage in freeze houses, is not adversely effected by the treatment. The peel thickness is generally reduced, and there is a tendency to reduce the amount of acidity, thereby producing sweeter lemons.

For grapefruit, the recommended application rate is again 37.5 g/ha. At the time of application, the grapefruit should be about 22-28 mm in diameter. When treated in accordance with these recommendations, average fruit weight has shown a statistically significant increase of 12 to 33 percent compared to untreated controls. Measurement of colour indicates an increase of the red colour in the peel, pulp, and juice in the variety Star Ruby. Preliminary data indicates that the content of hesperidine, the substance which gives the sour taste in grapefruits, is reduced. The peel thickness of treated grapefruit is reduced. Application rates in the range from 12.5 g/ha to 50 g/ha have all been found to produce some thinning in grapefruit. No other adverse results have been noted.

For mandarins, including tangerines and hybrids, the recommended application rate is 25 to 37.5 g/ha. At the time of application, the mandarins should be 22-26 mm in diameter. Application rates at the upper end of the 25-37.5 g/ha range are appropriate when the fruit has reached a size at the upper end of the 22-26 mm range. Mandarins are sensitive for thinning, and treatment before the fruit reaches 18 mm in diameter can lead to 40 to 50 percent thinning. After the fruit reaches 22 mm, treatment at the 37.5 g/ha rate may produce from 5 to 20 percent thinning, depending primarily on diameter variability of the fruit at the time of application. At the recommended rates of 25 to 37.5 g/ha a statistically significant average size increase of 7 to 14 percent has been observed. More significantly, in comparison to untreated plots, there are more fruits in Class I (greater than 63 mm) and Class II (58-63 mm) and less fruits below 48 mm where there is no commercial value. Treatment also decreases acidity content and increases sugar content, providing advanced maturity. Ripening occurs ten days sooner as a result of treatment. In addition, treatment in accordance with the invention provides colour improvement in most varieties and improvement in the peel quality, e.g. less cold pitting and less fruit splitting.

A slightly lower application rate is appropriate for oranges. Triclopyr applied at rates of 18.75 to 25 g/ha has been found to produce maximum size increase without producing any undesirable effects. Application rates of 50 to 75 g/ha may produce shrinking of the fruits and consequent yield reduction; on the other hand the higher application rates afford some residual effect the following year. At the time of application, the oranges should be 25 to 30 mm in diameter.

Triclopyr applied to oranges of the variety Navelate at the rate of 18.75 g/ha in July when the fruit was 25 to 30 mm in diameter increased fruit size and yield by 7 to 12 percent. There was also a reduction in peel thickness, reduction of acidity, and increase of colour.

It has also been found that an additional application of triclopyr at a rate of approximately 12.5 to 25 g/ha when the oranges turn from green to yellow (November) gives excellent control of preharvest fruit drop.

In general, the plant response is believed to be hormonal as demonstrated by the balance of an increased number and larger cells produced in the fruit.

Within a significant window of application timing and application rate, there are no evident phytotoxic effects.

## Claims

1. The use of 3,5,6-trichloro-2-pyridyloxyacetic acid or a C₁₋₁₀ alkyl ester or salt thereof as a plant growth regulating agent for providing increased fruit size or quality or faster maturation of fruit, without causing significant thinning, by
applying the said 3,5,6-trichloro-2-pyridyloxyacetic acid or C₁₋₁₀ alkyl ester or salt thereof to a fruit bearing plant
at an application rate that is nonphytotoxic and effective to provide increased fruit size or quality or faster maturation, and
at a time when the plant is bearing sufficiently mature fruit so that significant thinning does not occur.

2. A use as claimed in Claim 1 wherein the fruit bearing plant is a citrus tree bearing fruit having a diameter of from 20 to 30 mm.

3. A use as claimed in any one of the preceding claims, wherein the fruit bearing plant is a grapefruit or lemon tree, bearing fruit with a diameter of from 22 to 28 mm.

4. A use as claimed in any one of Claims 1 to 3, wherein the fruit bearing plant is a mandarin tree, bearing fruit with a diameter of from 22 to 26 mm.

5. A use as claimed in any one of the preceding claims, wherein the application rate is from 10 g/ha to 50 g/ha.

6. A use as claimed in Claim 5, wherein the application rate is from 20 to 40 g/ha.

7. A use as claimed in Claim 6, wherein the application rate is about 37.5 g/ha.

8. A use as claimed in any one of the preceding claims, wherein a solution containing from 5 ppm to 15 ppm of 3,5,6-trichloro-2-pyridyloxyacetic acid in water is applied to fruit trees at a rate of from 1000 to 2500 L/ha.

## Patentansprüche

1. Verwendung von 3,5,6-Trichlor-2-pyridyloryessigsäure oder eines C₁₋₁₀-Alkylesters oder Salzes hiervon als Pflanzenwachstums-Reguliervngsrnttel zur Bereitstellung von erhöhter Fruchtgröße oder -qualität oder früherer Fruchtreife ohne Veranlassung eines signifikanten Ausputzens, durch
Auftragen dieser 3,5,6-Trichlor-2-pyridyloxyessigsäure oder C₁₋₁₀-Alkylesters oder Salzes hiervon auf eine fruchttragende Pflanze,
mit einer Auftragsrate, welche nicht-phytotoxisch und effektiv ist, um erhöhte Fruchtgröße oder -qualität oder rascheres Reifen bereitzustellen, und
zu einem Zeitpunkt, zu welchem die Pflanze ausreichend reife Früchte trägt, so daß signifikantes Ausputzen nicht auftritt.

2. Verwendung nach Anspruch 1, bei welcher die fruchttragende Pflanze ein Zitrusbaum ist, welcher Früchte mit einen Durchmesser von 20 bis 30 mm trägt.

3. Verwendung nach einem der vorhergehenden Ansprüche, bei welcher die fruchttragende Pflanze ein Grapefrucht- oder Zitronenbaum ist, welcher Früchte mit einem Durchmesser von 22 bis 28 mm trägt.

4. Verwendung nach einem der Ansprüche 1 bis 3, bei welcher die fruchttragende Pflanze ein Mandarinenbaum ist, welcher Früchte mit einem Durchmesser von 22 bis 26 mm trägt.

5. Verwendung nach einem der vorhergehenden Ansprüche, bei welcher die Auftragsrate von 10 g/ha bis 50 g/ha ist.

6. Verwendung nach Anspruch 5, bei welcher die Auftragsrate von 20 g/ha bis 40 g/ha ist.

7. Verwendung nach Anspruch 6, bei welcher die Auftragsrate etwa 37,5 g/ha ist.

8. Verwendung nach einem der vorhergehenden Ansprüche, bei welcher eine Lösung, welche von 5 ppm bis 15 ppm 3,5,6-Trichlor-2-pyridyloxyessigsäure in Wasser enthält, mit einer Rate von 1000 bis 2500 l/ha auf Fruchtbäume aufgetragen wird.

## Revendications

1. Emploi de l'acide 3,5,6-trichloro-2-pyridyloxyacétique, de l'un de ses esters d'alkyle en C₁₋₁₀ ou de l'un de ses sels comme agent de régulation de croissance de plantes, pour augmenter la taille des fruits, améliorer leur qualité ou accélérer leur mûrissement, sans provoquer un éclaircissage significatif,
par application dudit acide 3,5,6-trichloro-2-pyridyloxyacétique, ou dudit ester d'alkyle en C₁₋₁₀ ou sel de cet acide, à une plante portant des fruits,
à un taux d'application qui n'est pas phytotoxique, mais qui provoque effectivement une augmentation de la taille des fruits, une amélioration de leur qualité ou une accélération de leur mûrissement,
et à un moment où la plante porte des fruits suffisamment mûrs pour qu'aucun éclaircissage significatif ne se produise.

2. Emploi conforme à la revendication 1, où la plante portant des fruits est un citrus qui porte des fruits dont le diamètre vaut de 20 à 30 mm.

3. Emploi conforme à l'une des revendications précédentes, où la plante portant des fruits est un pomelo ou un citronnier qui porte des fruits dont le diamètre vaut de 22 à 28 mm.

4. Emploi conforme à l'une des revendications 1 et 2, où la plante portant des fruits est un mandarinier qui porte des fruits dont le diamètre vaut de 22 à 26 mm.

5. Emploi conforme à l'une des revendications précédentes. où le taux d'application vaut de 10 g/ha à 50 g/ha.

6. Emploi conforme à la revendication 5, où le taux d'application vaut de 20 g/ha à 40 g/ha.

7. Emploi conforme à la revendication 6, où le taux d'application vaut à peu près 37,5 g/ha.

8. Emploi conforme à l'une des revendications précédentes, où l'on applique aux arbres fruitiers, à un taux de 1 000 à 2 500 l/ha, une solution contenant, dans de l'eau, de 5 ppm à 15 ppm d'acide 3,5,6-trichloro-2-pyridyloxyacétique.
